# EUROPÄISCHE PATENTSCHRIFT

(11) **EP 0 705 327 B1**
(45) Veröffentlichungstag und Bekanntmachung des Hinweises auf die Patenterteilung: **19.04.2000**
(21) Anmeldenummer: 94928310.5
(22) Anmeldetag: 16.06.1994
(51) Int. Cl.: C11D 3/39

(54) **MEHRKOMPONENTENBLEICHSYSTEM**
MULTICOMPONENT BLEACHING SYSTEM
SYSTEME DE BLANCHIMENT A PLUSIEURS COMPOSANTS

(30) Priorität: 16.06.1993 DE 4319696
(43) Veröffentlichungstag der Anmeldung: 10.04.1996
(73) Patentinhaber: CALL, Hans-Peter Dr., 52531 Übach-Palenberg (DE)
(72) Erfinder: CALL, Hans-Peter Dr., 52531 Übach-Palenberg (DE)
(74) Vertreter: Fitzner, Uwe, Dr.
(86) Internationale Anmeldenummer: EP9401967
(87) Internationale Veröffentlichungsnummer: WO9429425

(56) Entgegenhaltungen:
- WO-A-92/18687
- WO-A-95/01426
- WO-A-95/26393
- DE-A- 1 918 729
- DE-A- 4 231 767
- DE-B- 1 085 131
- FR-A- 1 569 954
- US-A- 3 986 974

## Beschreibung

Die vorliegende Erfindung betrifft ein neues Mehrkomponentenbleichsystem zur Verwendung mit waschaktiven Substanzen bestehend aus zum oxidativen Angriff von zu bleichenden Substanzen ausgewählten enzymatischen Oxidationskatalysatoren und geeigneten Oxidationsmitteln. Insbesondere im Niedertemperaturbereich sind die herkömmlichen Bleichsysteme in Haushaltswaschmitteln unbefriedigend. Unterhalb von 60°C Waschtemperatur muß das Standardbleichmittel H₂O₂/Natriumperborat/Natriumpercarbonat durch Zusatz von chemischen Bleichaktivatoren wie TAED und SNOBS aktiviert werden. Ferner wird nach besser biologisch abbaubaren, biokompatiblen und niedrig dosierbaren Bleichsystemen für die Niedrigtemperaturwäsche gesucht. Während für Eiweißstärke und Fettlösung sowie für die Faserbehandlung im Waschvorgang bereits Enzyme im technischen Einsatz sind, steht für die Waschmittelbleiche bisher kein enzymatisches Prinzip zur Verfügung.

In der WO 91/05839 A1 wird der Einsatz verschiedener oxidativ wirkender Enzyme (Oxidasen und Peroxidasen) zur Verhinderung des "Dye Transfers" beschrieben. Peroxidasen sind bekanntermaßen in der Lage, verschiedene Pigmente (3-Hydroxyflavon und Betalain durch Meerrettichperoxidase, Carotin durch Peroxidase) zu "entfärben".

Das Patent selbst beschreibt die Entfärbung (auch "bleaching" genannt) von aus der Wäsche abgelösten, in der Flotte vorliegenden Textilfarbstoffen (Umwandlung eines gefärbten Substrates in einen ungefärbten, oxidierten Stoff). Dabei soll das Enzym gegenüber z.B. Hypochlorit, das auch den Farbstoff auf oder in dem Gewebe angreift, den Vorteil haben, nur gelöst vorliegenden Farbstoff zu entfärben, wobei Wasserstoffperoxid oder eine entsprechende Vorstufe oder in situ generiertes Wasserstoffperoxid an der Katalyse der Entfärbung beteiligt sind. Die Enzymreaktion kann teilweise durch Zugabe von zusätzlichem oxidierbaren Enzymsubstrat, z.B. Metallionen wie Mn⁺⁺, Halogenidionen wie Cl⁻ oder Br⁻ oder organische Phenole wie p-Hydroxyzimtsäure oder 2,4-Dichlorphenol, gesteigert werden. Hierbei wird die Bildung von kurzlebigen Radikalen oder von anderen oxidierten Zuständen des zugesetzten Substrats postuliert, die für die Bleiche oder eine andere Modifikation der gefärbten Substanz verantwortlich sind.

In der US-A-4,077,768 wird die Verwendung von "iron porphin", "haemin chlorid" oder "iron phthalocynanine" oder Derivaten zusammen mit Wasserstoffperoxid zur Verhinderung des "Dye Transfers" beschrieben. Diese Stoffe werden aber bei einem Überschuß an Peroxid schnell zerstört, weshalb die Wasserstoffperoxid Bildung kontrolliert ablaufen muß.

Das Dokument DE-A-1918729 offenbart ein Waschmittel, in dem in situ ein Oxidationsmittel durch Zugabe von Glucose/Stärke und Enzymen, die die Glucose/Stärke zu Gluconsäure und Wasserstoffperoxid unwandeln, gebildet wird. Im Rahmen der insofern bekannten Maßnahmen wird Hydroxylamin oder Hydroxylaminsalz zur Inhibierung der Zersetzung des Wasserstoffperoxids durch Katalse eingesetzt. Das am 24.03.94 veröffentlichte Dokument DE-A-4231767 betrifft einen im wesentlichen analogen Stand der Technik.

Das Dokument WO-A-92/18687 beschreibt ein Mittel zum Bleichen von Farbstoffen in Spülwasser, i.e. von gelösten Substanzen.

Die am 12.01.95 bzw. am 05.10.95 veröffentlichten Dokumente WO 95/01426 A1 und WO 95/26393 A1 beschreiben Bleichmittel oder Waschmittel mit speziellen stickstoffhaltigen organischen Verbindungen, nämlich eine Verbindung gemäß der Formel 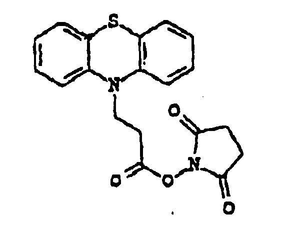 oder einen Stoff aus der Gruppe "Polyamin-N-Oxid-Polymere, Copolymere von N-Vinylpyrrolidon-, N-Vinylimidazol-, Polyvinylpyrrolidon-Polymeren".

Aufgabe dieser Erfindung ist es daher, ein Mehrkomponentenbleichsystem zur Verwendung mit waschaktiven Substanzen zur Verfügung zu stellen, das sich unter den Gesichtspunkten biologischer Abbaubarkeit, Biokompabilität, Dosierung und Bleicheffizienz vorteilhaft vom Stand der Technik abhebt.

Diese Aufgabe wurde gelöst mit einem Mehrkomponentenbleichsystem zur Verwendung mit waschaktiven Substanzen bestehend aus zum oxidativen Angriff von zu bleichenden Substanzen ausgewählten enzymatischen Oxidationskatalysatoren und geeigneten Oxidationsmitteln sowie zusätzlich einem Mediatorsystem bestehend aus NO-, NOH-, oder R-NHOH-haltigen Verbindungen, nicht jedoch Hydroxylamin NH₂OH oder Umsetzungsprodukte von Hydroxylamin mit anorganischen Säuren sind, ausgewählt aus der Gruppe "aliphatische, cycloaliphatische, heterocydlische oder aromatische N-Hydroxy-, Oxim-, N-Oxid-, N-Dioxid-Verbindungen; Hydroxylaminderivate; Hydroxamsäuren; Hydroxamsäurederivate" oder aus einer Kombination mehrerer dieser Stoffe, wobei die enzymatischen Oxidationskatalysatoren mit dem Mediatorsystem zusätzlich ein bezüglich Verschmutzungen unspezifisches bleichaktives Intermediat bilden und wobei das Mediatorsystem eine Verbindung gemäß der Formel 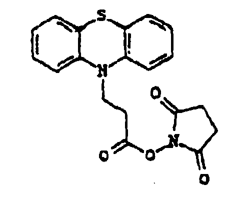 oder einen Stoff aus der Gruppe "Polyamin-N-Oxid-Polymere, Copolymere von N-Vinylpyrrolidon-, N-Vinylimidazol-, PolyvinylpyrrolidonPolymeren" nicht enthält.

Das Besondere der Erfindung ist der neuartige Einsatz eines Gemisches aus Enzym und Mediator zur Bleiche von Anschmutzungen auf Gewebe (vergleichbar zu konventionellen Bleichsystemen). Hierbei entsteht durch die Enzymreaktion aus dem Mediator ein "bleichaktives Intermediat", das in der Lage ist, Verunreinigungen, auch wenn sie nicht Enzymsubstrat sein sollten, anzugreifen.

Neben diesem "unspezifischen" Angriff ist aufgrund der Enzymspezifitäten eine Oxidation von allgemein als Problemflecken angesehenen Verschmutzungen durch Obst, durch Gerbstoffe aus Tee. Kaffee und Rotwein wahrscheinlich.

In einem weiteren Fall kann eine durch Bindung an ein Enzymsubstrat stabilisiert vorliegende Persäurrevorstufe durch die Enzymreaktion "aktiviert" werden, so daß die Bleichwirkung aufgrund des hohen Oxidationspotentials dieser freigesetzten Persäure stattfinden kann.

Erfindungsgemäß werden vorzugsweise als Katalysatoren Oxidoreduktasen eingesetzt. Als solche dienen vor allem Oxidasen, Peroxidasen, Ligninperoxidasen, Manganperoxidasen oder Laccasen.

Bevorzugt werden solche Enzyme, die aus Pilzen, Bakterien, Tieren und Pflanzen gewommen werden. Ebenso sind Teile von Pflanzen und Tieren, z.B. Zellkulturen einsetzbar.

Als Pilze für die Enzymgewinnung haben sich insbesondere Weißfäulepilze bewährt. Hier kommt ganz besonders Coriolus versicolor in Betracht.

Ebenso sind auch modifizierte Enzyme, Enzymbestandteile, prosthetische Gruppen oder Hämgruppen und Hämgruppen enthaltende Verbindungen einsetzbar. Letztere gehören zu den sogenannten Mimicverbindungen. Unter Mimicsubstanzen sind solche Stoffe zu verstehen, die, wie z.B. im Falle von Laccasesimulation, Kupferkomplexe darstellen, die Wirkung der katalytisch aktiven prosthetischen Gruppe nachahmen und so Oxidationen mit üblichen Laccasesubstraten durchführen können.

Die NO-, NOH- und 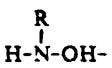 haltigen Verbindungen sind ausgwählt aus der Gruppen " aliphatische, cycloaliphatische, heterocyclische oder aromatische N-Hydroxy-, Oxim-, N-Oxid und N-Dioxid-Verbindungen; Hydroxylamin-Derivate; Hydroxamsäuren oder Hydroxamsäurederivate oder aus einer Kombination dieser Stoffe, und sie sind jedoch nicht Hydroxylamin NH₂OH oder Umsetzungsprodukte von Hydroxylamin mit anorganischen Säuren. Zusätzlich kann das Bleichsystem phenolische Verbindungen und/oder nicht-phenolische Verbindungen mit einem oder mehreren Benzolkernen enthalten. Alle diese Verbindungen dienen als sogenannte Mediatoren.

Die erfindungsgemäßen Oxidationsmittel sind Luft, Sauerstoff, H₂O₂, organische Peroxide, Natriumperborat und/oder Natriumpercarbonat. Sauerstoff kann auch durch H₂O₂ + Katalase oder H₂O₂ aus GOD+Glucose "in situ" generiert werden.

Bevorzugt wird ferner ein kationenbildendes Metallsalze enthaltendes Mehrkomponentenbleichsystem. Als Kationen sollen Fe²+, Fe³⁺, Mn²⁺, Mn³⁺, , Mn⁴⁺ , Cu⁺, Cu²⁺, Ti³⁺ , Cer⁴⁺ , Mg²⁺ und Al³⁺ verwendet werden.

Ferner kann das Bleichsystem zusätzlich Polysaccharide und/oder Proteine enthalten. Als Polysaccharide kommen Glucane, Mannane, Dextrane, Lävane, Pektine, Alginate oder Pflanzengummis und /oder eigene von den Pilzen gebildete oder in der Mischkultur mit Hefen produzierte Polysaccharide in Betracht. Als Proteine sind Gelatine oder, Albumin einsetzbar.

Hinzukommen können Einfachzucker, Oligomerzucker, Aminosäuren, PEG, Polyethylenoxide, Polyethylenimine und Polydimethylsiloxane.

Verwendung finden kann das erfindungsgemäße Mehrkomponentenbleichsystem in Kombination mit ansich bekannten waschaktiven Waschmitteladditiven.

Das Bleichsystem entfaltet seine Wirkung in einem pH-Bereich von 2 bis 12, vorzugsweise 4 bis 10 und bei Temperaturen zwischen 10° C und 60 °C, vorzugsweise 20 bis 400 ° C.

### Beispiel 1:

Einfluß des Laccase/Mediatorsystems auf (BC2) kaffeebeschmutztem Standardbaumwollappen.

Beispiel: In 100 ml Waschlösung (in 300 ml Erlenmeyerkolben) wird je ein Stafflappen (5x5 cm) bei 40 ° C für 40 min. unter Reziprok-Schütteln (120 cpm) inkubiert.

Vor Inkubationsbeginn wird die Waschlösung einer zehnminütigen Temperaturanpassung unterzogen. Die Waschlösung wird mit STW (Standard Tap Water) bei 14 ° dH. angesetzt. Als Enzymdosage werden 200.000 IU Laccase aus Coriolus versicolor /100 ml, als Mediatordosage wird 200 mg Hydroxybenzotriazol/100 ml eingesetzt.

Nach Abgießen der "Waschlauge" wird mit kaltem, starkem Wasserstrahl 3x aufgefüllt und abgegossen.

Tabelle 1 zeigt die Ergebnisse im Vergleich zu einem kommerziellen Flüssigwaschmittel (ohne Bleichsystem) und einem Vollwaschmittel (mit Bleichmittel).

### Beispiel 2:

Einfluß des Laccase Mediator Systems auf (BC 3) teebeschmutztem Standardwollappen.

In 100 ml Waschlösung (im 300 ml Erlemeyerkolben) wird je ein Stofflappen (5 x 5 cm) bei 40 ° C für 40 min. unter Reziprokachütteln 120 rpm inkubiert.

Vor Inkubationsbeginn wird die Waschlösung einer zehnminütigen Temperaturanpassung unterzogen. Die Waschlösung wird mit STW (Standard Tap Water) bei 14 ° dH. angesetzt. Als Enzymdosage werden 200.000 IULaccase aus Coriolus versicolor/100 ml und als Mediatordosage 200 mgHydrobenzotriazol/100 ml zugesetzt.

Nach Abgießen der "Waschlauge" wird mit kaltem, starkem Wasserstrahl 3x aufgefühlt und abgegossen. Die Ergebnisse sind in Tabelle 2 dargestellt.

### Beispiel 3:

Es wurde ein Versuch entsprechend Beispiel 1 durchgeführt. Als Mediator diente Acetoxybenzotriazol.
Das Ergebnis ist Tabelle 3 zu entnehmen.

**Tabelle 1**

| | pH | BC2 Weiße % | BC2 Helligkeit % |
|---|---|---|---|
| STW (0 Wert) | 4,5 | 2,55 | 2,3 |
| Vollwaschmittel | 10,1 | 8,9 | 6,15 |
| STW+Enzym+ Mediator | 4,5 | 4,9 | 5,8 |
| Flüssigwaschmittel | 4,5 | 3,85 | 3,75 |
| Flüssigwaschmittel+Enzym+ Mediator | 4,5 | 6,15 | 6,6 |

**Tabelle 2**

| | pH | BC3 Weiße % | BC3 Helligkeit % |
|---|---|---|---|
| STW (0 Wert) | 4,5 | 2,7 | 2,5 |
| Vollwaschmittel | 10,1 | 8,95 | 8,6 |
| STW+Enzym+ Mediator | 4,5 | 4,2 | 4,7 |
| Flüssigwaschmittel | 4,5 | 4,7 | 4,7 |
| Flüssigwaschmittel+Enzym +Mediator | 4,5 | 5,5 | 5,95 |

**Tabelle 3**

| | PH | Weißegrad | Helligkeitsgrad |
|---|---|---|---|
| STW Nullwert | 4,5 | 2,55 | 2,3 |
| Vollwaschmittel | 10,1 | 8,9 | 6,15 |
| STW + Enzym + Mediator | 4,5 | 5 | 6,1 |
| Flüssigwaschmittel | 4,5 | 3,85 | 3,75 |
| Flüssigwaschmittel + Enzym + Mediator | 4,5 | 6,2 | 6,7 |

## Patentansprüche

1. Mehrkomponentenbleichsystem zur Verwendung mit waschaktiven Substanzen bestehend aus
zum oxidativen Angriff von zu bleichenden Substanzen ausgewählten enzymatischen Oxidationskatalysatoren und geeigneten Oxidationsmitteln sowie
zusätzlich einem Mediatorsystem bestehend aus NO-, NOH-, oder R-NHOH-haltigen Verbindungen, nicht jedoch Hydroxylamin NH₂OH oder Umsetzungsprodukte von Hydroxylamin mit anorganischen Säuren sind, ausgewällt aus der Gruppe "aliphatische, cycloaliphatische, heterocyclische oder aromatische N-Hydroxy-, Oxim-, N-Oxid-, N-Dioxid-Verbindungen; Hydroxylaminderivate; Hydroxamsäuren; Hydroxamsäurederivate" oder aus einer Kombination mehrerer dieser Stoffe,
wobei die enzymatischen Oxidationskatalysatoren mit dem Mediatorsystem zusätzlich ein bezüglich Verschmutzungen unspezifisches bleichaktives Intermediat bilden und wobei das Mediatorsystem eine Verbindung gemäß der Formel 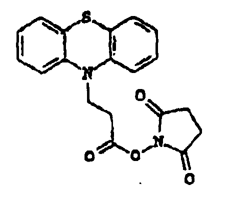 oder einen Stoff aus der Gruppe "Polyamin-N-Oxid-Polymere, Copolymere von N-Vinylpyrrolidon-, N-Vinylimidazol-, PolyvinylpyrrolidonPolymeren" nicht enthält.

2. Mehrkomponentenbleichsystem nach Anspruch 1, dadurch gekennzeichnet, daß die Katalysatoren Oxidoreduktasen sind.

3. Mehrkomponentenbleichsystem nach Anspruch 2, dadurch gekennzeichnet, daß die Katalysatoren Oxidasen oder Peroxidasen sind.

4. Mehrkomponentenbleichsystem nach Anspruch 3, dadurch gekennzeichnet, daß die Katalysatoren Ligninperoxidasen oder Manganperoxidasen sind.

5. Mehrkomponentenbleichsystem nach Anspruch 3, dadurch gekennzeichnet, daß die Katalysatoren Laccasen sind.

6. Mehrkomponentenbleichsystem nach einem der Ansprüche 2-5, dadurch gekennzeichnet, daß die Oxidoreduktasen von Weißfäulepilzen, anderen Pilzen, Bakterien, Tieren oder Pflanzen stammende Enzyme sind, die aus den natürlichen oder gentechnisch veränderten Organismen gewonnen werden.

7. Mehrkomponentenbleichsystem nach Anspruch 6, dadurch gekennzeichnet, daß die Enzyme aus Coriolus versicolor stammen.

8. Mehrkomponentenbleichsystem nach einem der Ansprüche 2-7, dadurch gekennzeichnet, daß die Katalysatoren modifizierte Enzyme, Enzymbestandteile, prostetische Gruppen oder Mimicsubstanzen wie Hämgruppen und Hämgruppen enthaltende Verbindungen sind.

9. Mehrkomponentenbleichsystem nach einem der Ansprüche 1-8, dadurch gekennzeichnet, daß es zusätzlich zu diesen Stoffen phenolische Verbindungen und/oder nichtphenolische Verbindungen mit einem oder mehreren Benzolkernen enthält.

10. Mehrkomponentenbleichsystem nach einem der Ansprüche 1-9, dadurch gekennzeichnet, daß die Oxidationsmittel Luft, Sauerstoff, H₂O₂, organische Peroxide, Natriumperborat oder Natriumpercarbonat sind.

11. Mehrkomponentenbleichsystem nach Anspruch 10, dadurch gekennzeichnet, daß O₂ durch H₂O₂ + Katalasebe und H₂O₂ aus GOD [Glucose-Oxidase] + Glucose "in situ" generiert wird.

12. Mehrkomponentenbleichsystem nach einem der Ansprüche 1-11, dadurch gekennzeichnet, daß es kationenbildende Metallsalze enthält.

13. Mehrkomponentnbleichsystem nach Anspruch 12, dadurch gekennzeichnet, daß die Kationen Fe²⁺, Fe³⁺, Mn²⁺,Mn³⁺, Mn⁴⁺, Cu⁺, Cu²⁺, Ti³⁺, Cer⁴⁺, Mg²⁺ und Al³⁺ sind.

14. Mehrkomponentenbleichsystem nach Ansprüchen 1 - 13, dadurch gekennzeichnet, daß es zusätzlich Polysaccharide und/oder Proteine enthält.

15. Mehrkomponentenbleichsystem nach Anspruch 14, dadurch gekennzeichnet, daß die Polysaccharide Glucane, Mannane, Dextrane, Lävane, Pektine, Alginate oder Pflanzengummis und/oder eigene von den Pilzen gebildete oder in der Mischkultur mit Hefen produzierte Polysaccharide oder die Proteine Gelatine oder Albumin sind.

16. Mehrkomponentenbleichsystem nach einem der Ansprüche 1-15, dadurch gekennzeichnet, daß es als Zusätze Einfachzucker, Oligomerzucker, Aminosäuren, Polyethylenglycole, Polyethylenimine und Polydimethylsiloxane enthält.

17. Verwendung des Mehrkomponentenbleichsystems nach einem der Ansprüche 1-16 als Zusatz zu Waschformulierungen mit an sich bekannten waschaktiven Substanzen oder Waschmitteladditiven.

18. Verwendung des Mehrkomponentenbleichsystems nach Anspruch 17 im pH-Bereich zwischen 2 und 12, vorzugsweise 4 und 10.

19. Verwendung des Mehrkomponentenbleichsystems nach einem der Ansprüche 1 bis 16 bei einer Temperatur zwischen 10°C und 60°C, vorzugsweise 20°C und 40°C.

## Claims

1. Multicomponent bleaching system for use with detersive substances, comprising
suitable oxidizing agents and enzymatic oxidation catalysts selected for oxidative attack of substances to be bleached, and
in addition, a mediator system comprising NO-, NOH- or R-NHOH-containing compounds - but not hydroxylamine NH₂OH or reaction products of hydroxylamine with inorganic acids - selected from the group consisting of aliphatic, cycloaliphatic, heterocyclic and aromatic N-hydroxy, oxime, N-oxide and N-dioxide compounds, hydroxylamine derivatives, hydroxamic acids and hydroxamic acid derivatives, or comprising a combination of two or more of these compounds,
the enzymatic oxidation catalysts additionally forming with the mediator system a bleaching-active intermediate which is non-specific with respect to soiling, and
the mediator system not including a compound of the formula 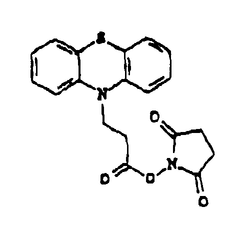 or a compound from the group consisting of polyamine N-oxide polymers, copolymers of N-vinylpyrrolidone, N-vinylimidazole, polyvinylpyrrolidone polymers.

2. Multicomponent bleaching system according to Claim 1, characterized in that the catalysts are oxidoreductases.

3. Multicomponent bleaching system according to Claim 2, characterized in that the catalysts are oxidases or peroxidases.

4. Multicomponent bleaching system according to Claim 3, characterized in that the catalysts are lignin peroxidases or manganese peroxidases.

5. Multicomponent bleaching system according to Claim 3, characterized in that the catalysts are laccases.

6. Multicomponent bleaching system according to one of Claims 2-5, characterized in that the oxidoreductases are enzymes originating from white rot fungi, other fungi, bacteria, animals or plants, and are obtained from the natural or genetically modified organisms.

7. Multicomponent bleaching system according to Claim 6, characterized in that the enzymes originate from Coriolus versicolor.

8. Multicomponent bleaching system according to one of Claims 2-7, characterized in that the catalysts are modified enzymes, enzyme constituents, prosthetic groups or mimic substances such as heme groups and compounds containing heme groups.

9. Multicomponent bleaching system according to one of Claims 1-8, characterized in that in addition to these compounds it comprises phenolic compounds and/or non-phenolic compounds having one or more benzene nuclei.

10. Multicomponent bleaching system according to one of Claims 1-9, characterized in that the oxidizing agents are air, oxygen, H₂O₂, organic peroxides, sodium perborate or sodium percarbonate.

11. Multicomponent bleaching system according to Claim 10, characterized in that O₂ is generated by H₂O₂ + catalase and H₂O₂ from GOD (glucose oxidase) + glucose in situ.

12. Multicomponent bleaching system according to one of Claims 1-11, characterized in that it comprises cation-forming metal salts.

13. Multicomponent bleaching system according to Claim 12, characterized in that the cations are Fe²⁺, Fe³⁺, Mn²⁺, Mn³⁺, Mn⁴⁺, Cu⁺, Cu²⁺, Ti³⁺, Ce⁴⁺, Mg²⁺ and Al³⁺.

14. Multicomponent bleaching system according to Claims 1-13, characterized in that it additionally comprises polysaccharides and/or proteins.

15. Multicomponent bleaching system according to Claim 14, characterized in that the polysaccharides are glucans, mannans, dextrans, lavans, pectins, alginates or plant gums and/or intrinsic polysaccharides formed by the fungi or produced in the co-culture with yeasts, or the proteins are gelatin or albumin.

16. Multicomponent bleaching system according to one of Claims 1-15, characterized in that it comprises, as additives, simple sugars, oligomer sugars, amino acids, polyethylene glycols, polyethyleneimines and polydimethylsiloxanes.

17. Use of the multicomponent bleaching system according to one of Claims 1-16 as an additive to detergent formulations with detergent additives or detersive substances which are known per se.

18. Use of the multicomponent bleaching system according to Claim 17 in the pH range between 2 and 12, preferably 4 and 10.

19. Use of the multicomponent bleaching system according to one of Claims 1 to 16 at a temperature of between 10°C and 60°C, preferably 20°C and 40°C.

## Revendications

1. Système de blanchiment à plusieurs composants destiné à être utilisé avec des substances détergentes, comprenant
des oxydants appropriés et des catalyseurs d'oxydation enzymatique choisis an vue de l'attaque oxydative ce substances à blanchir, et
en outre, un système médiateur comprenant des composés renfermant des groupes NO, NOH ou R-NHOH - mais pas l'hydroxylamine NH₂OH ni des produits de réaction de l'hydroxylamine avec des acides inorganiques - choisis parmi le groupe constitué de composés N-hydroxy, oxime, N-oxyde, N-dioxyde, aliphatiques, cycloaliphatiques, hétérocycliques ou aromatiques; de dérivés de l'hydroxylamine; d'acides hydroxamiques; de dérivés d'acide hydroxamique, ou comprenant une combinaison de plusieurs de ces substances,
les catalyseurs d'oxydation enzymatique formant en outre, avec le système médiateur, un intermédiaire actif de blanchiment non spécifique vis-à-vis des salissures, et
le système médiateur ne contenant pas de composé de formule 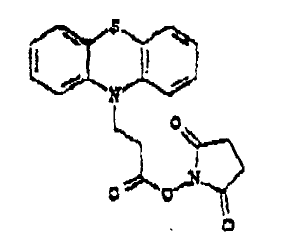 ni de substance parmi le groupe constitué de polymeres polyamine-N-oxyde et de copolymères de polymères de N-vinylpyrrolidone, de N-vinylimidazole et de polyvinylpyrrolidone.

2. Système de blanchiment à plusieurs composants selon la revendication 1, caractérisé en ce que les catalyseurs sont des oxydoréductases.

3. Système de blanchiment à plusieurs composants selon la revendication 2, caractérisé en ce que les catalyseurs sont des oxydases ou des peroxydases.

4. Système de blanchiment à plusieurs composants selon la revendication 3, caractérisé en ce que les catalyseurs sont des lignoperoxydases ou des manganèseperoxydases.

5. Système de blanchiment à plusieurs composants selon la revendication 3, caractérisé en ce que les catalyseurs sont des laccases.

6. Système de blanchiment à plusieurs composants selon l'une quelconque des revendications 2 à 5, caractérisé en ce que les oxydoréductases sont des enzymes provenant de champignons de pourriture blanche, d'autres champignons, de bactéries, d'animaux ou de plantes, et sont obtenues à partir des organismes naturels ou modifiés génétiquement.

7. Système de blanchiment à plusieurs composants selon la revendication 6, caractérisé en ce que les enzymes proviennent de Conclus versicolor.

8. Système de blanchiment à plusieurs composants selon l'une quelconque des revendications 2 à 7, caractérisé en ce que les catalyseurs sont des enzymes modifiées, des constituants d'enzymes, des groupes prosthétiques ou des substances mimétiques telles que des groupes hémiques et des composés renfermant des groupes hémiques.

9. Système de blanchiment à plusieurs composants selon l'une quelconque des revendications 1 à 8, caractérisé en ce qu'il contient, en plus de ces substances, des composés phénoliques et/ou des composés non phénoliques ayant un ou plusieurs noyaux benzéniques.

10. Système de blanchiment à plusieurs composants selon l'une quelconque des revendications 1 à 9, caractérisé en ce que les oxydants sont l'air, l'oxygène, H₂O₂, des peroxydes organiques, le perborate de sodium ou le percarbonate de sodium.

11. Système de blanchiment à plusieurs composants selon la revendication 10, caractérisé an ce que O₂ est généré par H₂O₂ + catalase et H₂O₂ à partir de GOD (glucose oxydase) + glucose "in situ".

12. Système de blanchiment à plusieurs composants selon l'une quelconque des revendications 1 à 11, caractérisé en ce qu'il contient des sels métalliques formant des cations.

13. Système de blanchiment à plusieurs composants selon la revendication 12, caractérisé an ce que les cations sont Fe²⁺, Fe³⁺, Mn²⁺, Mn³⁺, Mn⁴⁺, Cu⁴, Cu²⁺, Ti³⁺, Ce⁴⁺, Mg²⁺ et Al³⁺.

14. Système de blanchiment à plusieurs composants selon l'une quelconque des revendications 1 à 13, caractérisé en ce qu'il contient en outre des polysaccharides et/ou des protéines.

15. Système de blanchiment à plusieurs composants selon la revendication 14, caractérisé en ce que les polysaccharides sont des glucanes, des mannanes, des dextranes, des lavanes, des pectines, des alginates ou des gommes végétales et/ou des polysaccharides intrinsèques formés par les champignons ou produits en coculture avec des levures, ou les protéines sont la gélatine ou l'albumine.

16. Système de blanchiment à plusieurs composants selon l'une quelconque des revendications 1 à 15, caractérisé en ce qu'il contient, an tant qu'additifs, des sucres simples, des sucres oligomères, des acides aminés, des polyéthylèneglycols, des polyéthylène-imines et des polydiméthylsiloxanes.

17. Utilisation du système de blanchiment à plusieurs composants selon l'une quelconque des revendications 1 à 16, en tant qu'additif pour des formulations détergentes avec des substances détergentes ou des additifs pour détergents connus en soi.

18. Utilisaticn du système de blanchiment à plusieurs composants selon la revendication 17 dans la gamme de pH comprise entre 2 et 12, de préférence 4 et 10.

19. Utilisation du système de blanchiment à plusieurs composants selon l'une quelconque des revendications 1 à 16 à une température comprise entre 10°C et 60°C, de préférence 20°C et 40°C.
